# EUROPEAN PATENT SPECIFICATION

(11) **EP 1 840 507 B1**
(45) Date of publication and mention of the grant of the patent: **17.07.2013**
(21) Application number: 06425207.5
(22) Date of filing: 28.03.2006
(51) Int. Cl.: G01C 15/00, G06T 5/00

(54) **Method and integrated system for the digital survey of three-dimensional environments.**
Verfahren und Integrationssystem zur digitalen Vermessung von dreidimensionalen Umgebungen.
Procédé et système intégré pour le levé numérique des environnements tridimensionels.

(43) Date of publication of application: 03.10.2007
(73) Proprietor: Clarici, Riccardo, 00163 Roma (IT)
(72) Inventor: Clarici, Riccardo, 00163 Roma (IT)
(74) Representative: Romano, Giuseppe

(56) References cited:
- EP-A- 0 573 661
- US-A- 5 337 149
- US-A- 5 978 504

## Description

The present invention relates to a method and integrated system for the digital survey of three-dimensional geometry of architectural environments, useful for any type of environment outside or inside of buildings.

The need to carry out a digitized geometric survey of buildings, or anyhow of architectural environments, is known. Such a survey, when carried out with the required accuracy, is susceptible of various uses. In general, digital geometry may be used within the scope of CAD-type graphic processing programs.

E.g., it may be necessary to acquire the geometry of the interiors of a building, to arrange in advance plans, volume calculations, renovation projects, designs, business presentations, etc.

Environment digitizing may also be useful for the processing of sceneries and sets, video games, virtual reconstructions of monuments or archaeological areas and the like.

Two main known methodologies are utilized for the survey of buildings: the manual two-dimensional survey of the main dimensions and the three-dimensional survey by laser scanning.

Object of the first methodology is to measure or check the main dimensions of all environments (rooms, halls, etc.) in buildings for which knowledge of their current condition entails a technical and/or economic interest. Such a survey is carried out in two steps: an inspection generally carried out by at least two operators, one provided with a laser distance-measuring device, the other one in charge of storing results on paper or an electronic device; a processing, in which detected dimensions are reported on CAD programs, updating existing two-dimensional plans or creating new ones.

The manual character of the steps forces the operator to utilize this methodology solely for the survey of basic dimensions of a building; moreover, also big measuring errors are possible.

Object of the second methodology is to carry out three-dimensional surveys denoted by greater detail; said methodology is generally carried out in two steps: inspection with the use of a tripod-mounted three-dimensional scanner, with the option of referencing it with respect to an absolute position; processing, in which the set of detected points (point cloud) is transformed, by suitable software, into a three-dimensional CAD model. US 5 978 504 is such a system.

This methodology proves particularly slow, suitable for the survey of architectural artefacts, even complex ones like churches or archaeological monuments, yet not for the survey of buildings with a plurality of environments. The technical problem underlying the present invention is to provide a method and integrated system for the digital survey overcoming the drawbacks mentioned with reference to the known art.

Such a problem is solved by a method for the digital survey as specified in claim 1.

The invention also refers to an integrated system for the digital survey as specified in claim 7.

The main advantage of the method and integrated system for the digital survey according to the present invention lies in allowing an immediate survey of the environment with no need to set an absolute reference.

The present invention will hereinafter be described according to a preferred embodiment thereof, together with some preferred embodiments thereof, given by way of example and without limitative purposes with reference to the following examples and the annexed drawings, wherein:
* figure 1 shows a perspective view of an integrated system, worn on by an operator;
* figure 2 shows an enlarged perspective view of the integrated system of figure 1; and
* figures 3 to 7 illustrate different steps of digital survey with the method according to the invention.

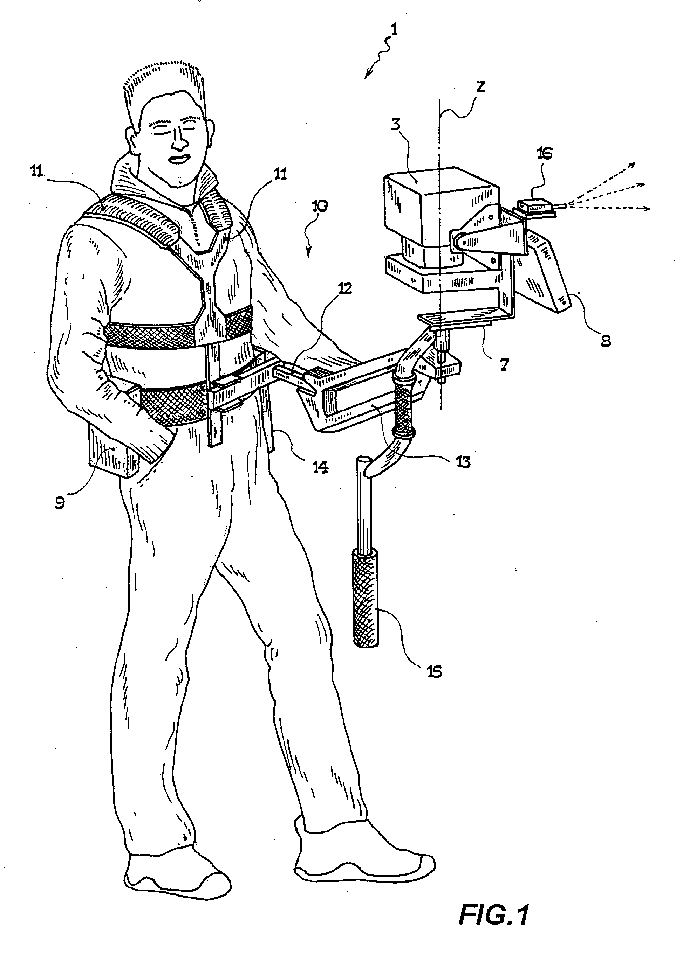

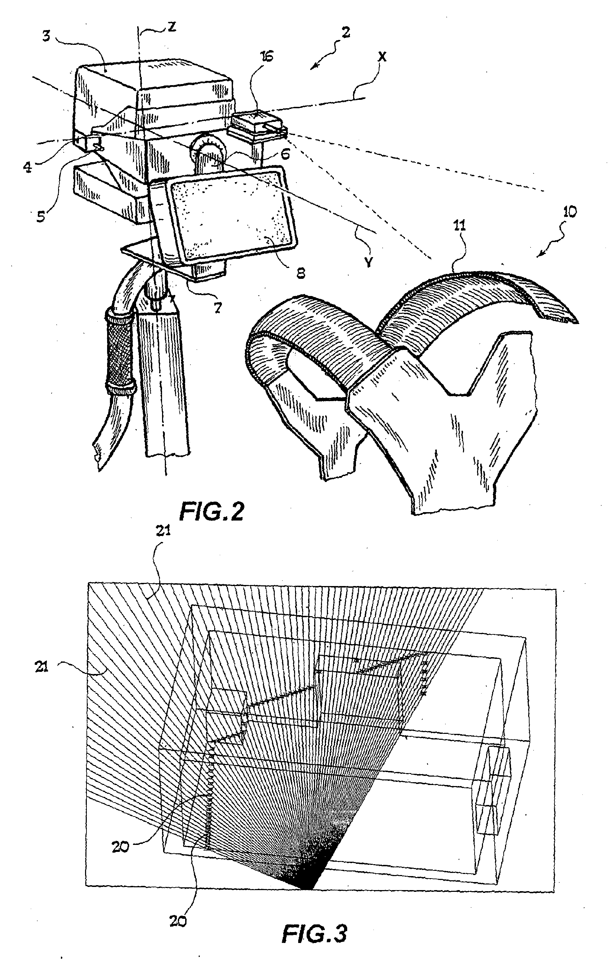

With reference to figures 1 and 2, an integrated system for the digital survey of three-dimensional geometries is generally denoted by 1.

The system 1 comprises a device 2 for measuring distances, in short detection device, composed of a light-emitting head, in particular a 2D laser-emitting head, denoted by 3, a servomotor 4 with an encoder 5 for the rotation of the laser-emitting head 3 about an axis X, i.e., the tilt axis, a support 6 steerable along a pitch axis Y, perpendicular to the preceding tilt axis X, rotatable to carry out tilted scans, means 16 for determining the position and the spatial orientation of the measuring device 2, comprising an inertial positioning system, e.g. of INS (Inertial Navigation System) type, a digital video camera 7 recording the whole scan area and displaying on a display 8 the result of the survey in real time.

Hence, said detection device 2 constitutes means for projecting light points according to a preset geometry, and also means for acquiring, for each projected point, the distance between point and emitting source and the angle of separation between consecutive projections, starting from the first projected point.

In other words, the device 2 is capable of projecting a sequence of projected points on a portion of architectural environment to be surveyed, measuring the distance between the emitting source and the point itself on the basis of the time elapsing between the projection instant and the detecting of the point (time of flight).

Moreover, the device 2 also detects, for each projected point, the angle separating each projection line starting from the first point.

Thus, the device 2 can project a series of points with projection lines lying on the same plane, carrying out a 2D measuring. Subsequently, thanks to the servomotor 4, the step can be repeated for plural planes, in turn separated by an angle, for a 3D measuring, as it will be made apparent hereinafter.

Said inertial positioning system 16 is integral with said emitting means and is capable of detecting, for each projected point, the position and the orientation of the light-emitting source with respect to a reference system. This because it is understood that, since the operator has to move and shift in order to scan the entire architectural environment of interest, the emitting source is movable and its linear position is obtained by integrating twice the linear accelerations detected by the inertial positioning system 16.

The system 1 further comprises a wearable computer 9, receiving and processing the data incoming from the detection device 2, and a peripheral device for data entry, preferably said TFT and touchscreen display 8, allowing to see, overlapped to reality, the real-time reconstruction of the lines traced by the CAD-type software and also working as operator's interface.

It is understood that the wearable computer may be replaced by a remote computer, connected to the detection device 2 via a wire or a wireless connection, according to any communication standard, like bluetooth®, Wi-Fi® or the like.

Finally, the integrated system 1 comprises a supporting and manoeuvring assembly 10 composed of belts 11 arranged so as to discharge the weight of the system 1 onto the operator's body, leaving arms free. Such an assembly 10 is further composed of articulated rods 12 allowing the desired positioning of the system 1, an isoelastic-type arm 13, calibrated on the weight of the detection device 2, insulating the latter from the operator's swinging, making the scanning more accurate, and a counterweight 14 with a manoeuvring handle 15 stabilizing the system 1 and allowing the shifting thereof. The counterweight 15 may contain a battery pack powering the electronic circuitry of what has been described in the foregoing.

The integrated system 1 will comprise also a device for detecting the absolute positioning, e.g. of GPS type, not depicted in the figures.

Hereinafter, it will be described the operation of the system illustrated hereto.

In order to know the geometry of an environment and then represent it in a plan, section or in a three-dimensional depiction thereof, it is necessary to measure the coordinates of a set of points and obtain therefrom the geometric entities of interest, like, e.g., corners of walls, windows, doors, etc. that will all be represented with lines traced by the software contained in the computer with which the system is equipped.

The integrated system 1 may concomitantly carry out all these steps, through the real-time processing of the measuring from the system for measuring distances and of that carried out by the inertial positioning system 16 for determining the position and the spatial orientation, hereinafter referred to as INS sensor 16, in a software residing in the computer 9. The operator manoeuvring the scanning sees through the display 8 the reconstruction under way of the geometry of the surrounding environment and therefore can operate in the most appropriate way.

The system 1 is based on the measuring of the distance by means of a laser beam, an optical receiver and a system for measuring the time of flight, i.e. the time taken by the beam to hit the target and then get back to the receiver. It is understood that any system for measuring distances may serve to the purpose.

It is understood that the sole measuring of the distance does not suffice to determine the position of an item. In fact, in order to know the coordinates of a detected point indicated by XR, YR, ZR with respect to a system of reference coordinates X, Y, Z the following information are required:
* position X1, Y1, Z1 of the scanning device 3 with respect to a reference system;
* rotation of the trio X', Y', Z' with respect to the reference trio - these rotations may be represented in different ways, e.g. with Eulerian angles;
* angle of the laser beam with respect to the scanning device 3; and
* distance D measured by the scanning device.

In the following description, it will be illustrated how the above-described system may obtain said information with the required degree of accuracy.

Upon having determined the system with which the position of a point is acquired, it is described how the system 1 obtains the basic dimensions of the environment.

In order to have a representation of the geometry of an environment, it is necessary to know the highest possible number of points, depending on the required degree of resolution.

This representation is made by carrying out a lattice of laser measuring in a defined area, or portion, of the architectural environment. The modes and the density of this scanning depend on different factors, yet it is anyhow possible to set general parameters.

The process, from a general standpoint, comprises the step of projecting, from said light-emitting source, a quantity of points distributed so as to cover said portion of architectural environment to be surveyed.

For each projected point, there are acquired the distance between point and emitting source and the angle of separation between consecutive projections, starting from the first projected point.

Thanks to the INS sensor 16, for each projected point it is detected, in real-time, the position of the light-emitting source with respect to a selected reference system.

Different scanning methodologies are available therefor. The preferred one, for efficiency reasons, is that of scanning with rotation about an axis perpendicular to the projection line, yet lying onto the projection plane *(Pitching Scan),* fixedly rotating the entire scanning mechanism of a pitch angle ranging from 0° to 30°.

According to the scanning mode, the scanning device 3 carries out two types of rotation:
* horizontal about the Z axis, of width FOV°H (*Field Of* View) with a resolution, defined as angular distance among scanned points, RES°H - this rotation occurs internally to the laser head 3; and
* vertical about the X-axis of width FOV° V with a resolution RES°V - this rotation is imposed to the laser head by a servomotor 4 and is measured by an encoder 5.

Hence, these quantities define the width of the area subjected to scanning and the resolution obtained.

From a practical standpoint, this scanning is carried out first by rotating the laser beam emitted by the device 2 about the Z axis, and subsequently by rotating the system along the X axis, of the number of degrees corresponding to the set resolution.

The scanning is carried on in this manner, until completing the whole range provided by the second axis.

As disclosed in the foregoing, in order to obtain the coordinates of a point, both the position and orientation of the scanning device 3 and the measure of the detected distance have to be known.

The data related to position and orientation is provided by the INS sensor, which operates as inertial platform integrating with the functions of the scanning device 3.

Specifically, an inertial platform is an electromechanic system allowing, given a trim and an initial position, to calculate the subsequent shifting, both of translation and rotation.

These systems are available as small-sized systems of MEMS type in semiconductors (solid-state micro-electromechanical systems resulting from the integration of mechanical elements, sensors, actuators and electronics on a silica substrate manufactured with micro production techniques).

Said MEMS instruments can perform the functions of gyroscope, accelerometer and magnetometer. The magnetometer provides information about the orientation of the magnetic North.

The orientation, expressed, e.g., by Eulerian angles, is calculated as follows: the MEMS system works as a gyroscope, accelerometer, magnetometer, producing three distinct outputs whose combination yields an output free of drift over time; in other words, the error does not tend to increase from the initial instant.

These devices output: data on the orientation in three dimensions (quaternions, Eulerian angles xyz, rotation matrix), the 3D rotation velocity; the 3D acceleration; the 3D magnetic field strength; and the temperature.

Concerning the positioning, a double integration over time of the instantaneous acceleration value, in the three axes provided by the INS sensor 16, is necessary to determine the position variation in X, Y, Z with respect to a given initial position.

This double integration entails, upon having set an initial position, an error increasing exponentially over time.

To overcome this drawback, it is necessary to implement techniques for correcting the error and then, before the latter exceeds the maximum value admissible for the application, it is necessary to set it to zero (clear it), resetting the exact position.

As to the individual devices, the scanning device 3 has the task of measuring the distance of a point of an environment to which it is aimed.

In order to operate as desired, preferably the scanning device has the following peculiarities.

First of all, the device 3 is comprised of receiver and distance measuring system and it should have a >20 m measuring range, even with items with a reflectivity of up to 10%.

Preferably, the laser used should be a class 1 laser, the type less dangerous for who may accidentally be illuminated thereby, with accuracy and resolution compatible with the application and with an integrated-type moving along two dimensions.

The device 3 should be provided with a suitable sampling frequency and scanning speed, as well as with data communication capability, e.g. via an RS232 type port, with a speed such as to process data in real time.

Of course, the weight and the dimensions will be compatible with the portability need.

In order to attain the aforedescribed type of scanning, the scanning device 3 should be equipped with a motorized mechanical system allowing the vertical scanning thereof. All data detected by the scanning device 2 and by the INS sensor 16 are transmitted to the computer 9 that therefore can process, with respect to said reference system, the coordinates of each projected point.

Hence, the computer 9 should carry out the following functions:
* receiving the data from the INS sensor 16;
* processing the data incoming from the INS sensor 16, carrying out the changes of coordinates, the integrations of the accelerations and other corrections;
* receiving the data from the scanning device;
* processing the data from the scanning device 3 integrating them with the INS data, to obtain a set of detected points complete with coordinates, and communicating with the encoder 5 for the vertical motion of the scanning device 3;
* processing all of said data, thereby reconstructing in real time the detected environment in a CAD-type environment; and
* providing through the display the real-time representation of the results, implementing the operator interface.

Preferably, the computer 9 should have the following peculiarities: lightness; small dimensions; low energy consumption; high resistance to vibrations and knocks; multitasking capability; good processing speed, sufficient to process all necessary information in real time; and adequate number of communication ports, sufficient to manage all peripherals present.

The computer operates in multitasking, therefore the software should concomitantly carry out the following steps:
* acquiring the data incoming from the INS sensor 16, with integration of the longitudinal acceleration components and related error correction algorithms;
* integrating the data incoming from the INS sensor 16 with the data incoming from the scanning device 3, and managing the vertical shifting of the latter - the data produced by this integration is represented by a sequential set of points containing: the angle of scanning H, the angle of scanning V, the coordinates Xi, Yi, Zi, and the time ti of the measuring carried out;
* representing the reconstructed environment, with the software interpreting the data of the sequential file of points to recreate the three-dimensional environment in real time and providing it to the user interface.

With reference to this latter step, in general it is a processing, by a linearization process, of a line connecting the coordinates of each projected point, checking, point by point and on the basis of a dimensional tolerance, the belonging to a same straight line or to a different straight line.

Thus, there is identified one or more broken lines representing one or more sections of the portion of said architectural environment.

This latter step consists in an interpreting of the outside world, seen as a discrete set of points, and in its transformation into a CAD model of reality.

Therefore, the software carries out a linearization of the set of points (point cloud) forming, e.g., a straight line, as those will be affected by two factors altering the rectilinear character thereof, i.e. the measurement errors and the deformations or roughness of the real surfaces.

Hereinafter there will be examined the methods utilized to carry out these linearizations, transforming a point cloud first into a set of broken lines and then into a set of corners.

The input data of the software are, at the end of each horizontal scanning, the data of the distances of all detected points that are transmitted from the scanning device 3 to the computer 9 by which are correlated to the data of position and rotation of the same device, and are transformed into a file, containing a sequential set of points with the related coordinates referred to a known origin.

Prior to having the scanning device provide a new set of data corresponding to the new vertical angle, the software should already have completed the processing of the preceding data.

In Figure 3 it is illustrated an example of a set of points 20 (crosses) detected in an environment by a family of lines 21 defined by the laser projecting of the scanning device.

When the first point is read from the set, it is stored as temporary data.

When reading the second point, a straight line connecting the two points is created: said line is classified as horizontal or vertical and stored in a matrix.

The next point is compared with the preceding line, and, if judged as belonging thereto, the latter is updated; otherwise, the new point is considered temporary data, and so on.

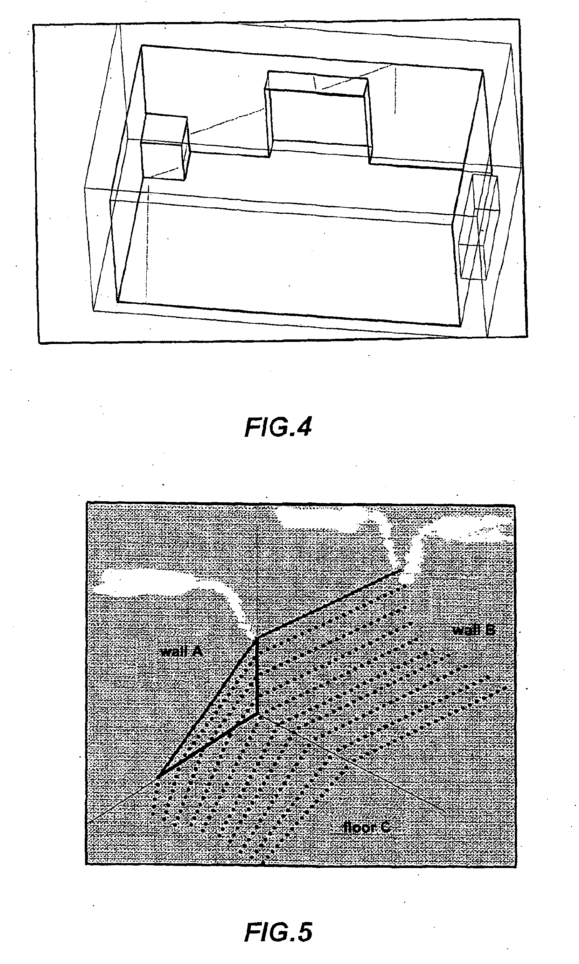

Various control methods are implemented in the system, to check the belonging of the points to the straight lines and to update the same. These methods allow to linearize points that will not necessarily be aligned (measuring errors, surface roughness) and to create, at the end of the process, a broken line getting as close as possible to the section of a plane with the real environment (figure 4).

The straight lines, be them horizontal or vertical, are stored in a matrix along with simple information (start point, end, angular coefficients, etc.).

At each vertical shifting of the scanner a family of lines is generated, yielded by the horizontal scanning.

The set of broken lines causes the forming of the corners (straight lines) that are none other than the basic lines to be traced in order to define an environment.

In fact, upon having created the first broken line, the latter is read backwards and, at each junction between different lines, the start of a corner is primed.

When analyzing the next broken line, each junction is compared with the preceding primers; if the required conditions do exist, the new junction will form with the primer the first length of the new corner.

Moreover, there could be exploited a case analysis, enabling to solve the cases in which plural straight lines branch off from a point, e.g. a corner between two walls and a horizontal plane.

At the end of this process, i.e., at the end of a complete scanning, two matrices will have been created, one of the straight lines forming the broken lines and the other one of the corners representing the reconstruction of the environment (figure 5).

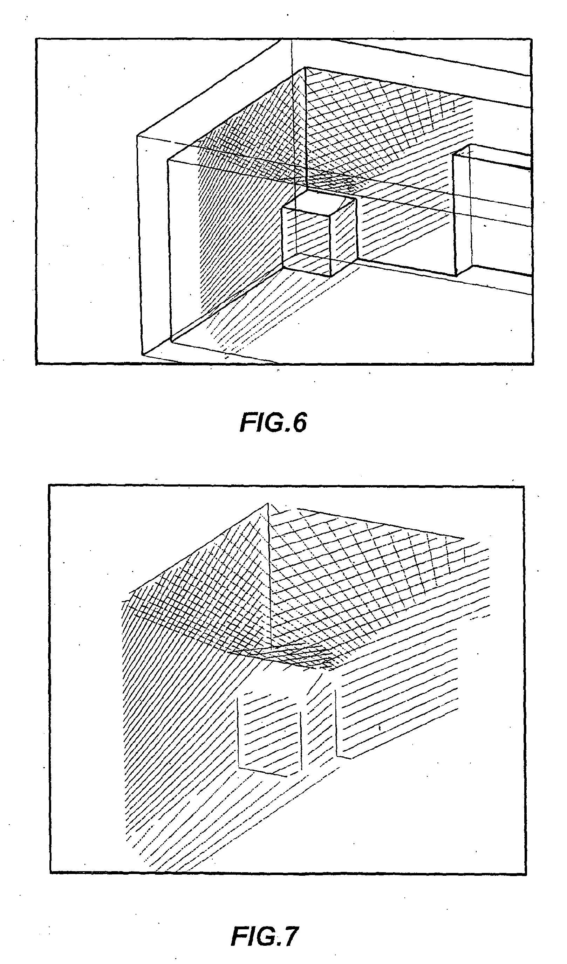

Referring to figures 6 and 7, there can be observed, with a different degree of detail, sets of broken lines produced through the reading of the positioning of the projected points and of the source thereof. It may be observed that the broken lines identify, in the points where they exhibit their deviations, corners in the environment to be surveyed. The deviations of adjacent broken lines are joined by graphic software in order to obtain a graphic representation of the environment.

Moreover, it may be observed that with a single broken line, obtained by projecting points substantially along a single plane, it is possible to obtain a two-dimensional representation of the environment, e.g. a plan or a cross section thereof.

In the software it is integrated also another significant function: the quantifying of the errors dX, dY, dZ accumulated by the integration of the data from the accelerometer trio (INS sensor 16) after a certain time dt, and the subsequent setting to zero (clearing) thereof.

Hence, there is the need to prevent the size of errors from compromising the measuring accuracy.

The procedure utilized to set the position error to zero consists in storing the coordinates of a first reference point, defined as cross-point between a horizontal plane and two vertical walls. During the survey of all other surfaces of the environment, the position error increases exponentially, until it reaches a value that is set as maximum; then, a time reserve available for acquiring again the first corner will be signalled to the operator. From the comparison between the first and the second acquiring, for each axis it is calculated the correction that will be applied, according to a suitable function over time, to all acquired elements; a time label is added to each measuring.

Thus, it is possible to scan an entire building starting from a system of coordinates and referencing all the environments with respect to the first system.

E.g., having to survey the interior of a building, the survey method is described as follows.

Prior to getting into the building, the apparatus has to be turned on and the inertial INS sensor 16 has to be set. For this purpose, said GPS receiver is connected to the wearable computer 9 to set initial coordinates XYZ. In the same step, it is necessary to arrange the integrated system 1 on a plane, in order to set the initial orientation thereof.

The apparatus is worn on by the operator who, by means of the interface, adjusts settings according to the survey that is to be carried out.

Then, the operator gets into the building and sequentially surveys all the environments of interest with the following methodology. First of all, the operator frames, with the aid of the display, the first corner appearing. Then, he/she checks that the acquiring generated by the representation software, and automatically overlapped to the image shot by the camera, is correct. This setting is input as reference setting, by a suitable pushbutton present on the interface. Thus, it is indicated that said corner would serve as reference to correct the INS sensor.

Then, the operator turns the system 1 to the next corner and acquires it, carrying on with the acquiring of all the surrounding environment, checking that the error accumulation signalling from the INS sensor does not overstep the maximum value. For this purpose an acoustic signalling may be provided.

When the apparatus signals an overstepping of the maximum value, the operator acquires the last reference a second time in order to set the errors to zero. For each environment, the operator should anyhow try to come out with an accumulated error level foreseen as low.

At the end of the survey, the operator exits the building and repeats the initial configuration in order to attain the final correction of the survey.

Once an entire building is acquired, it is possible to carry out the following steps for refining the end result:
* automatic cleaning of any straight line segments unconnected to other entities and therefore to be considered spurious;
* automatic or operator-assisted closing of any interruption of basic lines of the environments;
* in case of doubts on some interpretations, it is possible to review the camera shooting with reference to the place where it has been carried out; this is possible since the video recorded by the camera is temporally related to the scanning; and
* processing any curved surfaces detected.

Moreover, depending on the result that is to be obtained, it is possible to associate, by means of the images from the camera, a realistic mapping to all of the three-dimensional surfaces detected, yielding truly realistic virtual environments over reduced times.

In case of a survey of non-rectilinear or curved surfaces, such as a cylindrical wall, the representation software, though specialized for finding plane surfaces, is capable of providing a very useful representation.

In fact, a curved surface is approximated by means of a set of rectilinear lengths, from which the surface can then be easily obtained, by envelope.

The discretization is set by one of the parameters described hereinafter.

In order to attain a survey as accurate as possible, and above all close to the required specifications, it is necessary to aid the representation software in the task of interpreting reality.

In fact, depending on the result that is to be attained, scanning modes vary radically; therefore, it will be necessary to set the parameters of the scanning so as to have the software understand what is to be attained.

E.g., it could be desirable to know merely the main dimensions of a building, or, on the contrary, to detect the smallest architectural details.

The following examples are intended to explain the concept.

In the case of a building interior characterized by square lines and with scarce furniture, there will be set wide angles FOVV and FOVH allowing to concomitantly detect plural surfaces; large RESH and RESV, allowing to increase the scanning speed, and low roughness tolerances, as the surfaces are probably smooth.

When instead complex furniture and a high fractionation (subdivision) of the architectural volume are present, there will be used medium FOVV and FOVH angles, in order to detect all facets of the environments; medium RESH and

RESV, since, given the type of surfaces, a maximum resolution is unnecessary, and low roughness tolerances, since the surface are probably smooth.

In a building with smooth surfaces, yet with high architectural complexity, there will be selected low FOW and FOVH angles for a maximum-resolution close-up, low RESH and RESV, maximum resolution, and medium roughness tolerances or low angle tolerances, in order to detect the environments' facets.

From these examples it will be understood that, though the representation software is capable of automatically modifying the main parameters, an intelligent contribution by the operator is anyhow necessary to modulate the survey parameters, so as to attain the maximum result with the minimum time.

All this takes place easily through the touchscreen display interface.

To the above-described embodiment there may be effected the following variants:
* addition of a second accelerometer (three axes);
* adoption of an optical pointer for correcting the errors of the plane X, Y of the INS sensor;
* integration, under the scanning device 3, of another light beam illuminating a portion of the underlying ground, and measuring, e.g. with a CCD sensor, the configuration of the illuminated portion in order to automatically measure the shifting thereof by means of a dedicated software.
* integration of the existing system with sensors of other nature, e.g. an electromagnetic sensor, for the survey of conductors passed through by a current, an infrared sensor for finding pipes with fluids cold or hot (with respect to the walls), other types of sensors capable of finding hidden portions of the walls.

To the above-described method and integrated system for the survey a person skilled in the art, in order to satisfy further and contingent needs, could effect several further modifications and variants, all however encompassed in the protective scope of the present invention, as defined by the annexed claims.

## Claims

1. A method for the digital survey of three-dimensional geometry of architectural environments, comprising the steps of:
* projecting, from a light-emitting source, a quantity of points with projection lines lying on a same plane, distributed so as to cover a portion of an architectural environment to be surveyed, and acquiring, for each projected point, the distance between point and emitting source and the angle of separation between consecutive projections, starting from the first projected point;
* associating, integrally to said light-emitting source an inertial positioning system, and detecting, for each projected point, the position of the light-emitting source with respect to a reference system;
* transferring the detected data, with reference to the position of the projected point with respect to the emitting source and position of the source with respect to a reference system, to a computer, and processing, with respect to said reference system, the coordinates of each projected point;
* processing, by a linearization process, a line connecting the coordinates of each projected point, checking, point by point and on the basis of a dimensional tolerance, the belonging to a same straight line or to a different straight line, thereby identifying a broken line representing a section of the portion of said architectural environment;
* repeating the above steps for plural planes so to determine a family of broken lines defining the environment.

2. The method according to claim 1, wherein the inertial positioning system operates with the acquiring of the linear acceleration, the angular positioning and the angle of the light-emitting means with respect to the magnetic North.

3. The method according to any one of the preceding claims, comprising a step of recording by video camera the architectural environment.

4. The method according to any one of the preceding claims, wherein the linearization process has a step of reading a first point in a set of points; a storing of said first point as temporary data; a step of reading a next point, with creation of a straight line connecting the two points, which is classified as horizontal or vertical and stored in a matrix, a step of reading a next point, which is compared with the preceding straight line, and, if judged as belonging to the preceding straight line, the latter is updated, otherwise the new point is considered temporary data, and so on.

5. The method according to any one of the preceding claims, comprising a quantifying of the errors accumulated by the integration of the data after a certain time and a subsequent setting to zero thereof.

6. The method according to claim 5, wherein the quantifying of the accumulated errors comprises the storing of the coordinates of a first reference point, defined as cross-point between a horizontal plane and two vertical walls, the checking of the error during the survey of all other surfaces of the environment until the error reaches a value that is set as maximum; the new acquiring of said first reference point; the calculating, for each axis, of the correction that will be applied, according to a suitable function over time, to all acquired elements.

7. An integrated system for the digital survey as above specified, comprising:
* means (2) for projecting light points with projection lines lying on a same plane and means (2) for acquiring, for each projected point, the distance between point and emitting source and the angle of separation between consecutive projections, starting from the first projected point;
* an inertial positioning system (16), integral to said emitting means (2), capable of detecting, for each projected point with respect to a reference system, the position of the light-emitting source with respect to the position of the emitting source at the projecting of the first point;
* a computer (9), connected to said acquiring means (2) and to said inertial system (16), provided with a software such as to process, with respect to said reference system, the coordinates of each projected point; and to process, by a linearization process, a line connecting the coordinates of each projected point checking, point by point and on the basis of a dimensional tolerance, the belonging to a same straight line or to a different straight line, thus identifying a broken line representing a section of the portion of said architectural environment,
* wherein the projecting means and the acquiring means are comprised in a detection device (2) with a laser-emitting head, a servomotor (4) with an encoder (5) for the rotation of the laser-emitting head (3) about a tilt axis (X), so to determine a family of broken lines defining the environment.

8. The system according to claim 7, wherein the detection device (2) comprises a support (6) steerable along a pitch axis (Y), rotatable to carry out tilted scans.

9. The system according to any one of the claims 7 to 8, wherein the inertial positioning system comprises an INS-type sensor (16) for determining the position and the spatial orientation of the scanning device for acquiring images, performing the functions of accelerometer, gyroscope and magnetometer.

10. The system according to any one of the claims 7 to 9, comprising a display (8) for visualizing the traced lines.

11. The system according to any one of the claims 7 to 10, comprising a peripheral interface for data entry.

12. The system according to claims 10 and 11, wherein said display is of touchscreen type and constitutes said interface.

13. The system according to any one of the claims 7 to 12, comprising a supporting and manoeuvring assembly (10) composed of belts (11) arranged so as to discharge the weight of the system onto the operator's body, leaving arms free, of articulated rods (12) allowing the desired positioning of the system, of an isoelastic-type arm (13), calibrated on the weight of the scanning device (2) insulating the latter from the operator's swinging, and of a counterweight (14) with manoeuvring handle (15).

14. The system according to any one of the claims 7 to 13, comprising a device for detecting the absolute positioning.

15. The system according to claim 9, wherein said sensor (16) is constituted by a solid-state micro-electromechanical system (MEMS).

16. The system according to claim 9, comprising a trio of accelerometers.

17. The system according to any one of the claims 9 to 16, comprising a optical pointer for correcting the errors of the plane X,Y of the INS sensor (16).

18. The system according to any one of the preceding claims 7 to 17, comprising an electromagnetic sensor for the survey of conductors passed through by a current and/or an infrared sensor for finding pipes with cold or hot fluids.

## Patentansprüche

1. Verfahren zur digitalen Vermessung von dreidimensionaler Geometrie architektonischer Umgebungen, das folgendes aufweist:
- Projizieren, von einer Lichtabstrahlquelle, einer Menge von Punkten, deren Projektionslinien auf gleicher Ebene liegen und die so verteilt sind, dass sie einen Abschnitt einer architektonischen Umgebung, die vermessen werden soll, abdecken, und Erhalten, für jeden projizierten Punkt, der Distanz zwischen Punkt und Abstrahlquelle und des Trennungswinkels zwischen aufeinanderfolgenden Projektionen, angefangen bei dem ersten projizierten Punkt;
- Zuordnen, integral zu der besagten Lichtabstrahlquelle, eines Inertialpositioniersystems, und Erfassen, für jeden projizierten Punkt, der Position der Lichtabstrahlquelle hinsichtlich eines Bezugssystems;
- Übertragen der erfassten Daten, in Bezug auf die Position des projizierten Punkts hinsichtlich der Abstrahlquelle und Position der Quelle hinsichtlich eines Bezugssystems, an einen Computer und Verarbeiten, hinsichtlich des besagten Bezugssystems, der Koordinaten eines jeden projizierten Punkts;
- Verarbeiten, durch einen Linearisierungsvorgang, einer Linie, die die Koordinaten eines jeden projizierten Punkts verbindet, Überprüfen, Punkt für Punkt und auf Basis einer dimensionalen Toleranz, der Zugehörigkeit zu einer gleichen geraden Linie oder zu einer anderen geraden Linie, dadurch Identifizieren einer gebrochenen Linie, die einen Bereich des Abschnitts der besagten architektonischen Umgebung darstellt;
- Wiederholen der obigen Schritte bei mehreren Ebenen, so dass eine Familie von gebrochenen Linien bestimmt wird, die die Umgebung definieren.

2. Verfahren nach Anspruch 1, wobei das Inertialpositioniersystem mit dem Erhalt der linearen Beschleunigung, der winkeligen Positionierung und des Winkels des Lichtabstrahlmittels hinsichtlich des magnetischen Nordens arbeitet.

3. Verfahren nach einem der vorhergehenden Ansprüche, das einen Schritt des Aufnehmens durch eine Videokamera der architektonischen Umgebung aufweist.

4. Verfahren nach einem der vorhergehenden Ansprüche, wobei der Linearisierungsvorgang einen Schritt des Lesens eines ersten Punkts in einer Reihe von Punkten aufweist; ein Speichern des besagten ersten Punkts als temporäre Daten; einen Schritt des Lesens eines nächsten Punkts, mit der Schaffung einer geraden Linie, die die beiden Punkte verbindet und als horizontal oder vertikal eingestuft und in einer Matrix gespeichert ist, einen Schritt des Lesens eines nächsten Punkts, der mit der vorausgehenden geraden Linie verglichen wird, und, wenn er als zugehörig zu der vorausgehenden geraden Linie beurteilt wird, die Letztere aktualisiert wird, ansonsten der neue Punkt als temporäre Daten betrachtet wird, und so weiter.

5. Verfahren nach einem der vorhergehenden Ansprüche, der ein Quantifizieren der Fehler aufweist, die sich durch die Integration der Daten nach einer bestimmten Zeit und einem anschließenden Auf-Null-Stellen davon anhäufen.

6. Verfahren nach Anspruch 5, wobei das Quantifizieren der angehäuften Fehler das Speichern der Koordinaten eines ersten Bezugspunkts aufweist, der als Kreuzungspunkt zwischen einer horizontalen Ebene und zwei vertikalen Wänden definiert ist, das Überprüfen des Fehlers während der Vermessung aller anderen Flächen der Umgebung, bis der Fehler einen Wert erreicht, der als Maximum eingestellt ist; den neuen Erhalt des besagten ersten Bezugspunkts; das Berechnen, für jede Achse, der Korrektur, die, gemäß einer geeigneten Funktion über Zeit, auf alle erhaltene Elemente angewendet wird.

7. Integriertes System für die digitale Vermessung wie oben angegeben, das folgendes aufweist:
- Mittel (2) zum Projizieren von Lichtpunkten, deren Projektionslinien auf gleicher Ebene liegen, und Mittel (2) zum Erhalt, für jeden projizierten Punkt, der Distanz zwischen Punkt und Abstrahlquelle und des Trennungswinkels zwischen aufeinanderfolgenden Projektionen, angefangen bei dem ersten projizierten Punkt;
- ein Inertialpositioniersystem (16), integral zu dem besagten Abstrahlmittel (2), das, für jeden projizierten Punkt hinsichtlich eines Bezugssystems, die Position der Lichtabstrahlquelle hinsichtlich der Position der Abstrahlquelle bei der Projektion des ersten Punkts erfassen kann;
- einen Computer (9), der mit dem besagten Erhaltmittel (2) und dem besagten Inertialsystem (16) verbunden ist und mit einer Software versehen ist, so dass er, hinsichtlich des besagten Bezugssystems, die Koordinaten eines jeden projizierten Punkts verarbeitet; und, durch einen Linearisierungsvorgang, eine Linie verabeitet, die die Koordinaten eines jeden projizierten Punkts verbindet, und dabei, Punkt für Punkt und auf Basis einer dimensionalen Toleranz, die Zugehörigkeit zu einer gleichen geraden Linie oder zu einer anderen geraden Linie überprüft, wodurch eine gebrochene Linie identifiziert wird, die einen Bereich des Abschnitts der besagten architektonischen Umgebung darstellt,
- wobei das Projektionsmittel und das Erhaltmittel in einer Erfassungsvorrichtung (2) mit einem Laserabstrahlkopf, einem Servomotor (4) mit einem Verschlüsseler (5) für die Drehung des Laserabstrahlkopfes (3) um eine Schwenkachse (X) enthalten sind, so dass eine Familie gebrochener Linien, die die Umgebung definieren, bestimmt wird.

8. System nach Anspruch 7, wobei die Erfassungsvorrichtung (2) eine Stütze (6) aufweist, die entlang einer Nickachse (Y) lenkbar ist, drehbar zur Realisierung gekippter Abtastungen.

9. System nach einem der Ansprüche 7 bis 8, wobei das Inertialpositioniersystem einen Sensor nach INS-Art (16) zur Bestimmung der Position und der räumlichen Ausrichtung der Abtastvorrichtung zum Erhalt von Bildern aufweist, wodurch die Funktionen eines Beschleunigungsmessers, Gyroskops und Magnetometers ausgeübt werden.

10. System nach einem der Ansprüche 7 bis 9, das eine Anzeige (8) zur Visualisierung der verfolgten Linien aufweist.

11. System nach einem der Ansprüche 7 bis 10, das eine periphere Schnittstelle zur Dateneingabe aufweist.

12. System nach einem der Ansprüche 10 und 11, wobei die besagte Anzeige nach Art eines berührungsempfindlichen Bildschirms ausgebildet ist und die besagte Schnittstelle darstellt.

13. System nach einem der Ansprüche 7 bis 12, das eine Stütz- und Manövrierbaugruppe (10) aufweist, die aus Gurten (11), die dazu ausgestaltet sind, das Gewicht des Systems auf den Körper des Bedieners abzugeben, wobei die Arme frei gelassen werden, aus Gelenkstangen (12), die die gewünschte Positionierung des Systems erlauben, aus einem isoelastischen Arm (13), das auf das Gewicht der Abtastvorrichtung (2) kalibriert ist, wodurch die Letztere von den Schwingbewegungen des Bedieners geschützt ist, und aus einem Gegengewicht (14) mit Manövriergriffen (15) besteht.

14. System nach einem der Ansprüche 7 bis 13, das eine Vorrichtung zum Erfassen der absoluten Positionierung aufweist.

15. System nach Anspruch 9, wobei der besagte Sensor (16) aus einem mikro-elektromechanischen System (MEMS) in festem Zustand besteht.

16. System nach Anspruch 9, das ein Trio aus Beschleunigungsmessern aufweist.

17. System nach einem der Ansprüche 9 bis 16, das einen optischen Anzeiger zur Korrektur der Fehler der Ebene X, Y des INS-Sensors (16) aufweist.

18. System nach einem der vorhergehenden Ansprüche 7 bis 17, das einen elektromagnetischen Sensor für die Vermessung von Leiterbahnen aufweist, die von einem Strom durchlaufen werden, und/oder einen Infrarot-Sensor zum Finden von Rohren mit kalten oder warmen Flüssigkeiten.

## Revendications

1. Procédé de sondage numérique de la géométrie en trois dimensions d'environnements architecturaux, qui comprend les étapes consistant à :
- projeter, à l'aide d'une source luminescente, une quantité de points avec des lignes de projection placées sur un même plan, répartis de façon à couvrir une partie d'un environnement architectural à sonder, et acquérir, pour chaque point projeté, la distance entre ledit point et la source d'émission, et l'angle de séparation entre des projections consécutives, en commençant par le premier point projeté ;
- associer, intégralement avec ladite source luminescente, un système de positionnement inertiel, et détecter, pour chaque point projeté, la position de ladite source luminescente par rapport à un système de référence ;
- transférer les données détectées, en référence à la position du point projeté par rapport à la source luminescente et à la position de la source par rapport à un système de référence, vers un ordinateur, et traiter, par rapport audit système de référence, les coordonnées de chaque point projeté ;
- traiter, par un processus de linéarisation, une ligne qui relie les coordonnées de chaque point projeté, en vérifiant, point par point et sur la base d'une tolérance dimensionnelle, l'appartenance à une même ligne droite ou à une ligne droite différente, afin d'identifier ainsi une ligne interrompue représentant une section de la partie dudit environnement architectural ;
- répéter les étapes ci-dessus pour plusieurs plans de façon à déterminer une famille de lignes interrompues définissant ledit environnement.

2. Procédé selon la revendication 1, dans lequel ledit système de positionnement inertiel fonctionne avec l'acquisition de l'accélération linéaire, le positionnement angulaire et l'angle du moyen luminescent par rapport au Nord magnétique.

3. Procédé selon l'une quelconque des revendications précédentes, qui comprend une étape d'enregistrement, par caméra vidéo, dudit environnement architectural.

4. Procédé selon l'une quelconque des revendications précédentes, dans lequel ledit processus de linéarisation possède une étape de lecture d'un premier point dans un ensemble de points ; une étape de stockage dudit premier point en tant que données provisoires ; une étape de lecture d'un point suivant, avec la création d'une ligne droite reliant les deux points, qui est classé comme horizontal ou vertical et stocké dans une matrice ; une étape de lecture d'un point suivant, qui est comparé avec la ligne droite précédente, et, si il est jugé comme appartenant à ladite ligne droite précédente, ce dernier est mis à jour, sinon, le nouveau point est considéré comme des données provisoires, etc.

5. Procédé selon l'une quelconque des revendications précédentes, qui comprend une quantification des erreurs accumulées par l'intégration des données au bout d'un certain temps, et leur remise à zéro ultérieure.

6. Procédé selon la revendication 5, dans lequel ladite quantification des erreurs accumulées comprend le stockage des coordonnées d'un premier point de référence, défini comme point de croisement entre un plan horizontal et deux parois verticales ; la vérification de l'erreur pendant le sondage de toutes les autres surfaces dudit environnement jusqu'à ce que ladite erreur atteigne une valeur définie comme maximale ; la nouvelle acquisition dudit premier point de référence ; le calcul, pour chaque axe, de la correction qui sera appliquée, selon une fonction adéquate au fil du temps, à tous les éléments acquis.

7. Système intégré destiné au sondage numérique susmentionné, qui comprend :
- un moyen (2) destiné à projeter des points lumineux avec des lignes de projection sur un même plan, et un moyen (2) destiné à acquérir, pour chaque point projeté, la distance entre ledit point et la source d'émission, et l'angle de séparation entre des projections consécutives, en commençant par le premier point projeté ;
- un système de positionnement inertiel (16), intégré audit moyen d'émission (2), capable de détecter, pour chaque point projeté par rapport à un système de référence, la position de ladite source luminescente par rapport à la position de ladite source d'émission au niveau de la projection dudit premier point ;
- un ordinateur (9), relié audit moyen d'acquisition (2) et audit système inertiel (16), muni d'un logiciel de façon à traiter, par rapport audit système de référence, les coordonnées de chaque point projeté ; et à traiter, par un processus de linéarisation, une ligne reliant les coordonnées de chaque point projeté, en vérifiant, point par point et sur la base d'une tolérance dimensionnelle, l'appartenance à une même ligne droite ou à une ligne droite différente, afin d'identifier ainsi une ligne interrompue représentant une section de la partie dudit environnement architectural,
- dans lequel ledit moyen de projection et ledit moyen d'acquisition sont compris dans un dispositif de détection (2) muni d'une tête d'émission laser, d'un servomoteur (4) équipé d'un codeur (5) en vue de la rotation de ladite tête d'émission laser (3) autour d'un axe d'inclinaison (X), de façon à déterminer une famille de lignes interrompues définissant ledit environnement.

8. Système selon la revendication 7, dans lequel ledit dispositif de détection (2) comprend un support (6) mobile le long d'un axe de tangage (Y), capable de tourner afin d'effectuer des balayages inclinés.

9. Système selon l'une quelconque des revendications 7 à 8, dans lequel ledit système de positionnement inertiel comprend un capteur de type INS (16) destiné à déterminer la position et l'orientation spatiale du dispositif de balayage destiné à acquérir des images, en effectuant les fonctions d'accéléromètre, de gyroscope et de magnétomètre.

10. Système selon l'une quelconque des revendications 7 à 9, qui comprend un écran (8) destiné à visualiser les lignes tracées.

11. Système selon l'une quelconque des revendications 7 à 10, qui comprend une interface périphérique destinée à la saisie de données.

12. Système selon les revendications 10 et 11, dans lequel ledit écran est un écran tactile et constitue ladite interface.

13. Système selon l'une quelconque des revendications 7 à 12, qui comprend un ensemble de support et de manoeuvre (10) composé de courroies (11) disposées de façon à décharger le poids du système sur le corps de l'opérateur, en lui laissant les bras libres ; de tiges articulées (12) permettant de positionner correctement le système ; d'un bras isoélastique (13), calibré sur le poids du dispositif de balayage (2) et empêchant ce dernier de faire basculer l'opérateur ; et d'un contrepoids (14) muni d'une poignée de manoeuvre (15).

14. Système selon l'une quelconque des revendications 7 à 13, qui comprend un dispositif de détection du positionnement absolu.

15. Système selon la revendication 9, dans lequel ledit capteur (16) est composé d'un système micro-électromécanique à semi-conducteurs (MEMS).

16. Système selon la revendication 9, qui comprend un trio d'accéléromètres.

17. Système selon l'une quelconque des revendications 9 à 16, qui comprend un pointeur optique destiné à corriger les erreurs du plan X, Y dudit capteur INS (16).

18. Système selon l'une quelconque des revendications 7 à 17, qui comprend un capteur électromagnétique destiné au sondage des conducteurs traversés par un courant, et/ou un capteur infrarouge destiné à trouver des conduites de liquides froids ou chauds.
